# EUROPEAN PATENT SPECIFICATION

(11) **EP 0 958 628 B1**
(45) Date of publication and mention of the grant of the patent: **28.06.2006**
(21) Application number: 97915045.5
(22) Date of filing: 13.03.1997
(51) Int. Cl.: H01M 8/04, H01M 8/06, H01M 8/00, F17C 1/00, F17C 7/00, B01J 13/02

(54) **STORAGE AND DELIVERY OF PRESSURIZED GASES IN MICROBUBBLES**
LAGERUNG UND ABGABE VON UNTER DRUCK STEHENDEN GASEN IN MIKROBLASEN
STOCKAGE ET APPORT DE GAZ SOUS PRESSION DANS DES MICROBULLES

(30) Priority: 13.11.1996 US 748701
(43) Date of publication of application: 24.11.1999
(73) Proprietor: MINNESOTA MINING AND MANUFACTURING COMPANY, St. Paul, Minnesota 55133-3427 (US)
(72) Inventor: DEBE, Mark, K., Saint Paul, MN 55133-3427 (US)
(74) Representative: Vossius & Partner
(86) International application number: PCT/US1997/003935
(87) International publication number: WO 1998/021772

(56) References cited:
- DE-A- 1 704 811
- GB-A- 1 439 440
- US-A- 3 260 620
- US-A- 3 508 694
- US-A- 3 653 972
- US-A- 4 349 456
- PATENT ABSTRACTS OF JAPAN vol. 006, no. 106 (C-108), 16 June 1982 & JP 57 034158 A (REAMETARU:KK), 24 February 1982,
- INTERNATIONAL JOURNAL OF HYDROGEN ENERGY, vol. 19, no. 8, 1994, OXFORD GB, pages 697-700, XP002035595 A. A. AKUNETS ET AL: "SUPER-HIGH-STRENGTH MICROBALLOONS FOR HYDROGEN STORAGE"

## Description

This invention relates to an article and method for storing, delivering, and releasing gases from pressurized microbubbles. The article is useful as a fuel or oxidant storage and delivery system to supply electrochemical power devices, such as fuel cells and chemical batteries, particularly those used in portable power applications.

It is known in the art to store gases, including gaseous or liquid hydrogen and oxygen, in pressurized bulk containers or tanks. Such bulk containers are not easily portable and require considerable care for safe handling, especially in cryogenic storage.

Pressurized tanks have low gravimetric energy density due to the weight of the tank or metal cylinder required to withstand high pressures where safety is an issue, and they require a pressure regulator for controlled delivery.

It is also known in the art to store hydrogen in the form of rechargeable metal hydrides or reactive chemical hydrides. Storage of hydrogen in bulk-lots of glass microbubbles has also been proposed as a fuel delivery system for automotive combustion engines, wherein the hydrogen is released by heating and diffusion out of the glass microbubbles, allowing them to be refilled. See U.S. Patent Nos. 4,328,768, 4,211,537, and 4,302,217. The ability of glass microbubbles to be filled with and hold hydrogen at pressures exceeding 41.4 MPa (6000 psig) for long periods of time has been disclosed in P.C. Souers, R.T. Tsugawa and R.R. Stone, "Fabrication of the Glass Microballoon Laser Target," Report Number UCRL-51609, Lawrence Livermore Laboratory, July 12, 1974; and Michael Monsler and Charles Hendricks, "Glass Microshell Parameters for Safe Economical Storage and Transport of Gaseous Hydrogen," presented April 1, 1996, at the Fuel Cells for Transportation TOPTEC meeting, Alexandria, VA.

As disclosed in the art mentioned above, in bulk hydrogen storage in glass microbubbles, the microbubbles are heated to temperatures on the order of 250°C or higher to cause release of the hydrogen by diffusion through the glass microbubble walls. It is intended that they be reusable. See, for example, U.S. Patent No. 4,328,768, which discloses microbubbles filled with hydrogen gas that are heated to diffuse gas for supply to a combustion engine; U.S. Patent No. 4,211,537, and U.S. Patent No. 4,302,217, which disclose hydrogen supply methods. These high temperatures are not conducive to portable power applications (up to about 3 kW) because of both safety issues and the energy needed to heat the microbubbles to enable release. Fast stop and start release is not a feature of this approach.

Delivery and release of stored hydrogen include thermal or chemical activation of the hydrides to release hydrogen, or thermal heating of the glass microbubbles sufficient to permit out-diffusion of the hydrogen through the glass microbubble walls (the reverse process of how they were filled).

Metal hydrides are state-of-the-art hydrogen storage materials for supplying hydrogen to portable fuel cell devices, but can be limited by gravimetric energy density, high pressure containment or high temperature release, and thermal management. High performance metal hydrides currently offer 200-225 Whr/kg including containment packaging, in conjunction with state-of-the-art fuel cells operating near ambient temperature.

Reactive chemical hydrides have higher energy densities, but controlled release has been a problem. Reactive chemical hydrides are projected to reach 500 Whr/kg but are not always practical or safe because once hydrogen evolution begins, it cannot be easily stopped.

Safety issues, weight, thermal management, pressure containment and control, and portability are a concern with conventional storage and delivery systems for gases.

The present invention is defined by the features of the claims and provides an article comprising at least one containment means comprising pressurized gas-filled microbubbles, the gas being controllably releasable on demand by fracturing the microbubbles. The containment means can be a carrier such as a sheet-like support or a porous web having an adherent or tacky or tackifiable surface or layer. It can also be a microbubble-loaded porous web. In other embodiments the containment means can be a gas permeable or gas impermeable holder, envelope or bag or it can be a plurality of small envelopes on or without a carrier. The microbubbles in the holder, envelope, or bag can be bonded or restrained. Preferably, the gas is a reductant gas such as hydrogen, or an oxidant gas such as oxygen.

In another aspect, this invention provides a method of delivering a gas at a controlled rate comprising the steps:
a) providing an article as defined above comprising at least one containment means supporting pressurized gas-filled microbubbles, the gas being releasable on demand, and
b) subjecting the pressurized gas-filled microbubbles to a means for releasing the gas from the microbubbles at a controlled rate by fracturing.

Preferably, the means for releasing the gas is a mechanical means such as crushing by compressive or tensile stressing, shearing, or stretching, a thermal means such as radiation heating, conduction heating, or convection, or an acoustic means such as sonication, to cause the microbubbles to fracture. Other mechanical means include using piezoelectric driven minihammers to stress the microbubbles, allowing their internal pressure to rupture the microbubbles.

In yet another aspect, this invention provides an apparatus for delivering gas at a controlled rate comprising:
a) an article as defined above comprising at least one containment means supporting pressurized gas-filled microbubbles, the gas being releasable on demand,
b) a means for causing release of the gas from the microbubbles by fracturing, and
c) a feedback and control means for supplying gas at a rate determined by a load.

In a preferred embodiment, an article of the invention can be rolled up into a cylindrical form (like a roll of 35 mm film) and packaged such as in a replaceable cartridge. An exit slot in the package can be part of a fracturing means.

In a still further aspect, supplying the microbubbles packaged in a bulk form, within many small envelopes, with or without additional support, and then breaking them to release the gas is also within the scope of the present invention. In some applications, it may be desirable to affix the microbubble-filled envelopes to a support. The envelopes may be porous to the gas but not the microbubbles, and can serve as a container for ease and disposal of the subsequently broken microbubbles. Such porous envelopes facilitate delivery of the gas.

In a still further aspect, supplying the microbubbles packaged in bulk form within a single large containment means such as an envelope or bag, and then breaking them as they are dispersed through an aperture or orifice in a fixed end of the bag, thereby releasing the gas, is also within the scope of the present invention. The package may be porous and may wholly contain the fracturing means to allow for ease in handling and disposal of microbubbles as well as delivery of the gas.

In many applications, ease in handling gas-filled microbubbles, assuring 100 percent breakage on demand, and ease of disposal are facilitated when the microbubbles are fixed to a support. In the present invention preferred embodiment, the microbubbles are fixed to or enmeshed in a carrier which also protects the microbubbles from spontaneous breakage due to mutual abrasion when handling or shipping.

In this application:
"adherent", "tacky" or "tackifiable" describes a substance that can be applied to a surface as by, for example, bar, knife, curtain, immersion, or spray coating and that binds or is capable of binding microbubbles;
"carrier" means a conveying means for delivering microbubbles to a fracturing means. In some instances, it also incorporates a support;
"containment means" refers to a holder for gas-filled microbubbles; the holder can be a support for restraining gas-filled microbubbles therein or thereon; or the holder can be an enclosure for free-flowing gas-filled microbubbles;
"support" means a substrate or web-like containment means for microbubbles; and
"web" means sheet-like structure that can be porous or non-porous.

The present invention is advantageous in that it provides an electrochemical or chemical reactant in a safe high gravimetric energy density format, potentially over 4 percent by weight hydrogen or proportionately higher for other gases, or 700 Whr/kg, when supplying a hydrogen/air fuel cell that operates at ambient temperature. The supply of gas can be easily and repeatedly stopped and restarted, and the article containing the gas-filled microbubbles can have a shelf life of years.

Fuel supply systems using the storage, delivery, and release articles of the present invention provide large safety margins in fuel, storage, and delivery, operating temperatures near ambient, and fast recharge. These articles are particularly useful to supply fuel to a portable power device, such as a fuel cell or a thermochemical generator.

Compared to tank or hydride storage means for hydrogen, the pressurized microbubbles-on-carrier delivery system of this invention offers lighter weight and safer handling and recharging of a portable power device. In a preferred embodiment of this invention, crushed glass microbubbles (sand) and carrier (e.g., polyethylene terephthalate (PET)) offer benign environmental disposal or recycling.
FIG. 1 shows an article of the invention in tape format passing through fracturing means.
FIG. 1a shows an enlarged view of the tape of FIG. 1 having gas-filled microbubbles on both surfaces of a carrier.
FIG. 1b shows an enlarged view of an article not comprised by the invention wherein the microbubbles are adhered to and supported by a fibrous matrix.
FIG. 1c shows an article of the invention having envelopes containing gas-filled microbubbles attached to others or to one surface of an optional support.
FIG. 1d shows an article of the invention having envelopes containing gas-filled microbubbles which can be attached to others or to both surfaces of an optional support.
FIG. 2 shows a packaged format of the invention having a cylindrical shape incorporating a rolled-up article of the invention.
FIG. 3 shows a schematic of a feedback and control system to supply fuel at a rate required by a load.
FIG. 4a shows a scanning electron micrograph SEM (150X, 45° view) of gas-filled microbubbles attached to a substrate.
FIG. 4b shows an SEM (300X, normal incidence view) of the sample of FIG. 4a.
FIG. 5 is an SEM (200X), of gas-filled microbubbles.
FIG. 6 is a scanning electron micrograph (500X) of gas-filled microbubbles attached to both sides of a carrier and overcoated with a thin adherent conformal layer.
FIG. 7 is an SEM (300X) of an edge view of multiple layers of gas-filled microbubbles attached to each other and both sides of a support.
FIG. 8a shows a perspective view (portion cut-away) of a package of free-flowing microbubbles in bulk having an exit port and delivery and fracturing means for the microbubbles; this package does not fall within the scope of the claims.
FIG. 8b shows a perspective view of an alternative packaging means (portion cut-away) for delivery and fracturing of free-flowing microbubbles; this packaging means does not fall within the scope of the claims.

The article of this invention provides storage, delivery, and controlled release of fuel or oxidant gases to electrochemical and chemical devices that produce electric or thermal power. This invention also relates to processes for making the article in a web-based format or in a layered structure.

In a preferred embodiment, the containment means and gas-filled microbubbles are in a sheet-like format and are rolled up into a cylindrical form so as to maximize the overall volumetric and gravimetric densities of the gas storage and delivery system.

In another preferred embodiment, the gas-filled microbubbles can be contained in at least one envelope, bag, or tube that may be porous or nonporous to the gas. Optionally, the envelope, bag, or tube can contain a fracturing means, such as a mechanical, thermal, or acoustic means. In other embodiments, the fracturing means can be located outside the containment means.

The storage portion of this invention consists of hollow microbubbles, filled with oxidizable or oxidizing gases to high pressures.

Important characteristics of the microbubbles include their shapes, sizes or volumes and size distributions, wall thickness, density, aspect ratio (ratio of mean diameter to wall thickness for spheres), material composition, permeability of those materials to gases as a function of temperature for filling purposes, and material strength.

The microbubbles can have arbitrary shapes, but preferably are spherical so as to withstand maximum internal pressures. Other shapes include any geometric three dimensional polygons with arbitrary numbers of sides, ranging from cubes to buckminsterfullerenes to spheres, cylinders, hemispheres or hemicylinders, pyramids, and the like.

The microbubbles can have a distribution of sizes (i.e., volumes or average diameters). The distribution can be described by a particle size characterization function, e.g., Gaussian, Lorentzian, or log-normal, or it can be unimodal (meaning only one size microbubbles), bimodal, trimodal, or multimodal. A bimodal, trimodal, or multimodal size distribution is preferred over a unimodal distribution because the packing efficiency can be increased.

Preferably, the microbubbles can have average diameters (maximum dimension) in the range of 1 to 1000 µm, preferably 5 to 200 µm. Preferably, the microbubbles can have average volumes in the range of 50 cubic micrometers to 5 million cubic micrometers.

Microbubble shells useful in the invention can be ceramic, metal such as Ti and Pd, but preferably they are glass. Shells that are brittle and break when mechanical pressure or other means is applied, are preferred. Preferably, shells have negligible permeability to the gas contained therein at the use temperature and high permeability at the temperature of filling. Average thicknesses of the shells can be in the range of 0.01 µm to 20 µm, more preferably 0.1 µm to 2.0 µm. The hollow cavity of the shells can comprise any gas, preferably hydrogen or oxygen, and preferably the gas is at a pressure in the range of 0.69 to 138.0 MPa (100 to 20,000 psi), more preferably 6.9 to 69.0 MPa (1000 to 10,000 psi). Gas-filled microbubbles can be made according to methods of preparation disclosed in any of U.S. Patent Nos. 2,797,201, 2,892,508, 3,030,215, 3,184,899, and 3,365,315.

In general, in preferred embodiments, using microbubbles with higher glass tensile strength (e.g., about 483,000 kPa) or lower aspect ratio (diameter to wall thickness) will enable higher pressurization because gas content increases with smaller aspect ratios and because thinner shells hold much less pressure. Use of shells with higher gas permeabilities at lower temperature can facilitate increasing the gas pressure at use temperatures and thereby the gas density per unit volume of filled microbubbles. It is readily understood from the Ideal Gas Law that the drop of internal pressure upon cooling after filling to the use temperature will be minimized when the filling temperature is as low as possible, consistent with adequate gas permeability of the shells. Similarly, optimizing the packing density of the microbubbles on a support by a more effective deposition method or by controlling the microbubble diameters, or both, can also increase the gas loading.

The support of the present invention can be of any material that can support, entrap or contain gas-filled microbubbles. Preferably, the support is flexible and porous and has desirable shape, dimensions, and density to engender an optimum packing efficiency of the gas-filled microbubbles. Preferred supports include thin low density polymeric webs, solid or perforated.

In one embodiment, the support can comprise a tackifiable material, preferably in sheet form such as a tape, upon one or more surfaces of which a thin layer of closely packed microbubbles can be adhered. Representative tackifiable materials include polymers, such as polyolefin, for example polyethylene.

A thin layer of microbubbles can comprise, in one embodiment, 1 to 10 or more monolayers of unimodal sized microbubbles, or in another embodiment, a mixed layer of multimodal sized microbubbles having a thickness equal to about 1 to 10 times the average diameter of the microbubbles.

In a further embodiment, a thermally sensitive tackifiable layer of emulsion can be coated onto a web and allowed to dry. Thereafter, the web can be heated to a temperature sufficient to cause the coated layer to become tacky, and allowed to contact the microbubbles before cooling to a nontacky state. The microbubbles' very low mass allows them to easily stick to the tackified layer. In still another embodiment, a solvent containing polymer spray coating, such as an acrylic paint spray, can be applied to the web and allowed to partially dry before contacting with microbubbles. Thereafter, another spray coating can be applied to the first layer of microbubbles to either help adhere them to the web or to provide a tackified surface for addition of a second layer of microbubbles. This process can be repeated until the desired loading of microbubbles is achieved.

In another embodiment, the support can be coated with an adhesive layer, preferably a pressure-sensitive adhesive (PSA), which PSAs are well known in the art. Gas-filled microbubbles can be adhered to such supports using slight pressure. It is desirable to avoid encapsulating the microbubbles with too thick an adhesive layer so that subsequent breaking of the shells would be hindered.

In yet another embodiment, the support can be a polymer including a porous web, such as fibrillated polyolefin and substituted polyolefins, such as polytetrafluoroethylene (PTFE); blown microfibers including polyolefin, polyester, polyamide, polyurethane, or polyvinylhalide; wet-laid fibrous pulps such as polyaramid, polyolefin, or polyacrylonitrile; into which supports gas-filled microbubbles can be incorporated as disclosed in, for example, U.S. Patent Nos. 5,071,610, 5,328,758, and International Application No. WO 95/17247, which are incorporated herein by reference.

Mechanical pressure sufficient to break the microbubble shells is to be avoided during preparation of the microbubble-loaded webs or supports. Preferably, the webs have porosity sufficient to allow escape of the gas from the carrier when mechanical or other fracturing means are applied to rupture the shells.

In all these embodiments relating to gas-filled microbubbles coated on a web and using mechanical fracturing means, it is desirable that the substrate web be resistant to compression so as to provide a hard surface against which to break the microbubbles. Web materials with hardness characteristics similar to those of extruded PET films are preferred.

It is further preferred that the support web thickness and/or density be made as small as is feasible (for adequate strength and handleability), so that the ratio of gas weight to support weight per unit area is as large as possible.

Similarly, the amount of adhesive or tacky or tackifiable coatings or binders applied to the web or microbubbles to provide multiple layers of microbubbles should be as small as possible consistent with adequate adherence, so as to keep the percentage weight of gas contained per unit area of web as large as possible. For example, a preferred microbubble loaded carrier comprising hydrogen, glass microbubbles, binder and substrate may have proportionate weight percentages of 5 percent hydrogen, 45 percent glass, 18 percent binder, and 32 percent substrate. A ratio of 10 percent by weight hydrogen is further preferred per unit area of carrier and may be obtained by both minimizing the weight per unit area of the substrate and binder, and maximizing the gas pressure contained within the microbubbles.

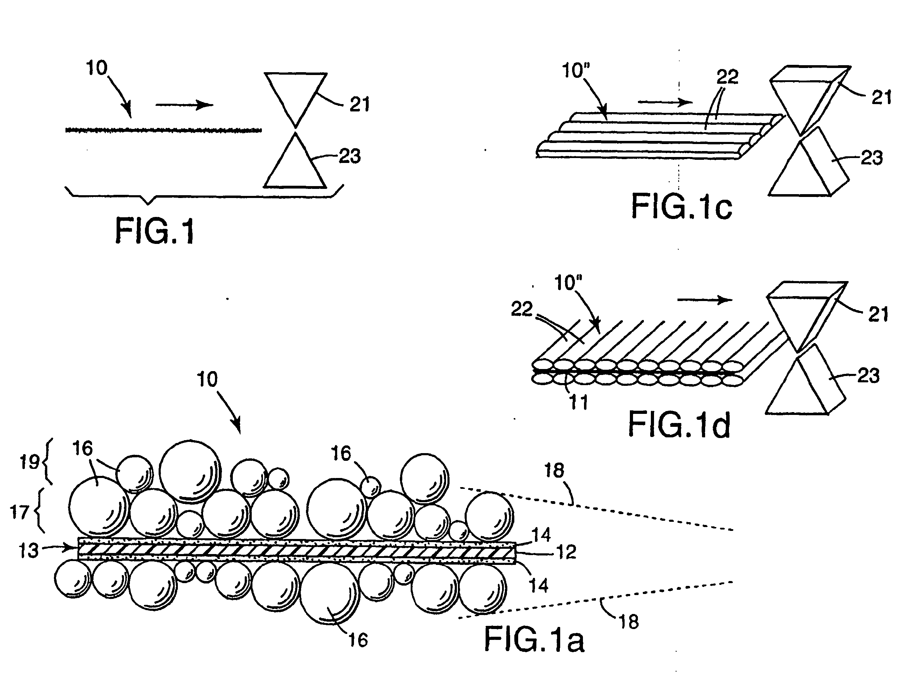

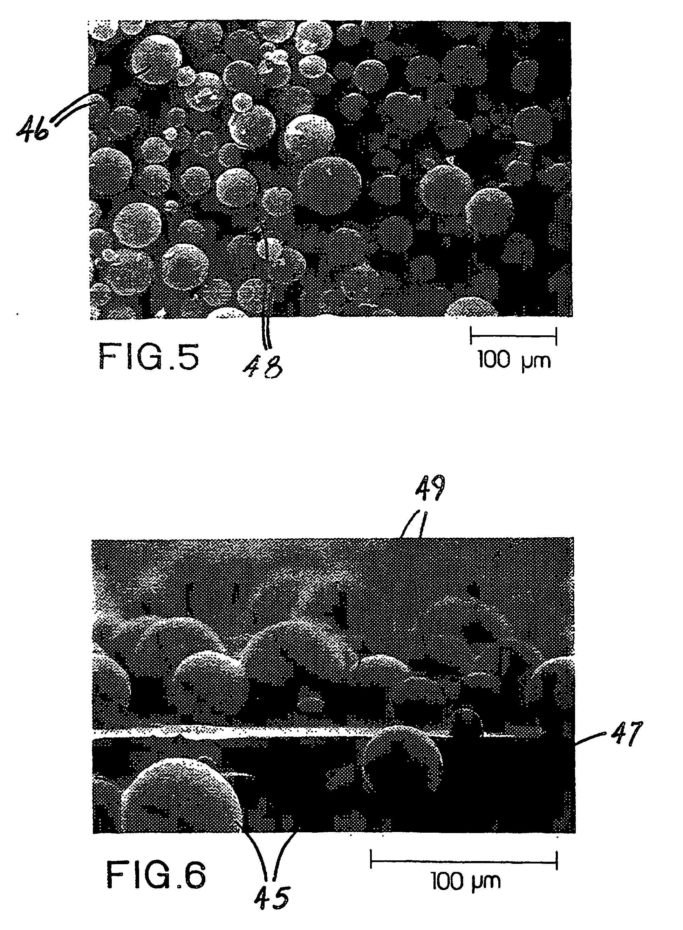

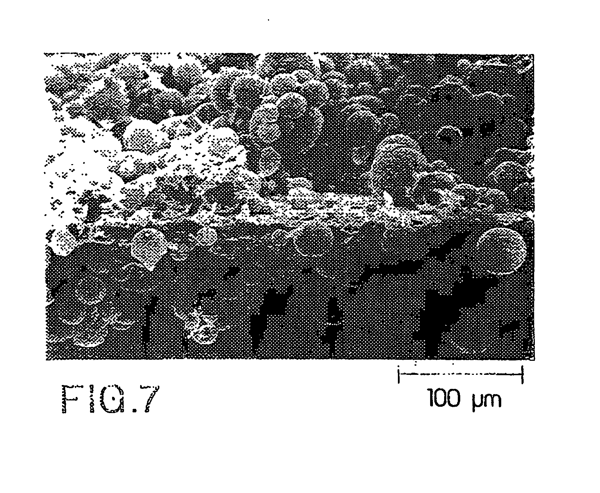

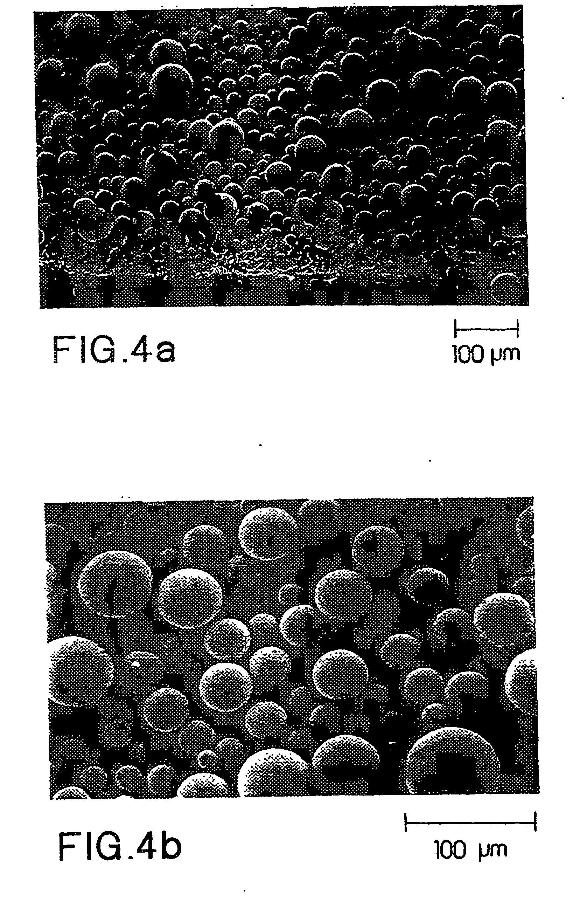

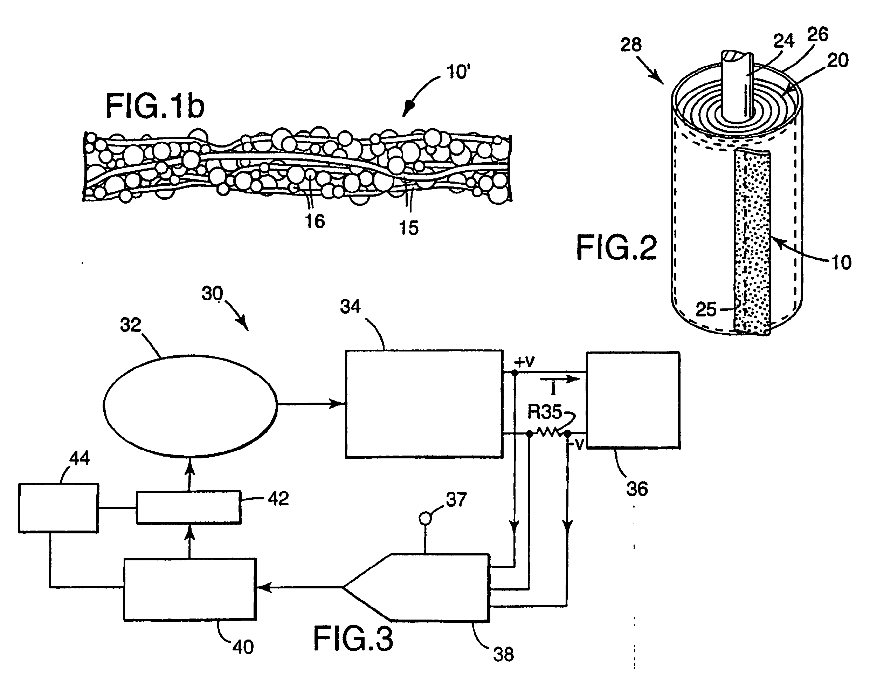

As shown in FIG. 1, article (10), which comprises gas-filled microbubbles (not shown), can pass by at least one means (21, 23) for fracturing the microbubbles and releasing a gas. Fracturing means (21, 23) can be mechanically driven rollers, the surface of which optionally can have a roughness and hardness as, for example, from a coating, to facilitate fracturing the microbubbles. In another embodiment, fracturing means (21, 23) can be a thermal means such as a pair of heated surfaces which in close contact with article (10) heat the microbubbles sufficiently to cause stress resulting in rupture of the shells and release of the gas. In still other embodiments, fracturing means (21, 23) can be an acoustic means such as focused sound waves at appropriate frequencies to couple sufficient acoustic energy into the shells of the microbubbles to cause their fracture.

In a preferred embodiment, as shown in FIG. la, article (10) is a low density flexible carrier (13) which can be tacky or non-tacky, optionally comprising support (12) coated on both sides with a layer of adhesive (14), flexible carrier (13) being overcoated with gas-filled microbubbles (16). Gas-filled microbubbles (16) can be in a single layer (17) or in more than one layer represented by (17) and (19). When heated, carrier (13) may be tacky but at room temperature may be non-tacky. As shown by dotted lines (18), a possible fracturing means in the form of crusher rollers (not shown) can be used and, as the gap narrows between rollers (18, 18), gas in hollow microbubbles (16) is released as the microbubble shells break under increasing compression and shear.

In a more preferred embodiment, the hollow microbubbles (16) are glass walled microbubbles, approximately 10-100 micrometers in diameter, filled with hydrogen at pressures up to 69,000 kPa (10,000 psig).

FIG. 1b shows an article of the invention 10', preferably in tape format, comprising gas-filled microbubbles (16) adhered to and supported by fibrous matrix (15). It is to be understood that some of the gas-filled microbubbles can be adhered to each other.

FIGs. 1c and 1d show alternative embodiments of articles 10", not intended to be limiting, for packaging gas-filled microbubbles. In one embodiment shown in FIG. 1c, one or a plurality of packages (22) act as a support and containment means for the microbubbles. In another embodiment shown in FIG. 1d, packages (22) are shown adhered to support (11). Preferably, packages (22) which contain microbubbles therein can be porous to the gas released from the microbubbles as article (10') or (10") goes through fracturing means (21, 23) but not porous to fractured microbubble shell residues. Packages (22) preferably do not rupture but remain intact containing shell residues for ease in disposal after the gas is released. Useful package materials include porous polymeric material such as polyolefin, expanded TEFLON, poly(vinyl acetate), poly(vinyl chloride), or cellulose, or paper having pores smaller than the smallest microbubbles.

A variety of methods can be used to bond or incorporate gas-filled microbubbles to or in a support. Heat-bonding and wet-bonding methods are discussed in Examples 3 and 4, below.

A number of methods for forming a thin bonding layer (also called a binder) can be used for attaching the microbubbles to a lightweight, flexible, hard substrate, including thin layers of pressure sensitive adhesives, for depositing of monomers and photo or thermal curing of the monomers, and for reactive curing with the substrate. A bonding layer can be applied to the substrate which additionally can react to form a bond with the microbubble surface or its surface coating.

It is also envisioned that the support can be homogeneous, i.e., lacking a coating, but can be softenable or reactively bondable with the microbubbles' surfaces. Carrier geometries other than planar tape forms are also envisioned in this invention, but those which maximize the rate of delivery of microbubble coated surface area to the release device, while engendering maximum microbubble breakage with the least drive power requirement, are preferred.

Other types of supports, e.g., porous supports with densities lower than polyethylene terephthalate (PET), such as polyolefin including polyethylene and polypropylene, can also be used. The substrate may be perforated with holes, the diameters of which preferably can be smaller than about 90 percent of the microbubbles.

Conceptually, it is also possible to envision microbubbles held together by a network of connecting ligaments, such as polymer filaments, applied in a blown microfiber process to a layer of microbubbles to form a substrate-less web. The microbubbles can be distributed in a single layer over the surface of a nontacky substrate, then exposed from the top to a spray of meltblown microfibers which cool and solidify upon contact with the microbubbles linking them together. The polymer fibers can also be produced from a curable (photo-, thermal, other) system and applied in like manner.

As shown in FIG. 2, a roll (20) of the inventive article (10) is optionally packed in a dispenser (26). Article (10) is wound around shaft (24) into roll (20) (like, for example, a roll of 35 mm photographic film), forming a replaceable cartridge (28). The optional dispenser (26) for roll (20) can be of any suitable material including plastic, metal, or paper. An exit port in dispenser (26) can be a slot (25) comprising fracturing means such as an abrasive surface capable of scratching the microbubbles, causing them to burst as article (10) is pulled therethrough.

In use, cartridge (28) fits into a gas-tight receiving means (not shown) having a motor driven means for unwinding roll (20) as it travels by the fracturing means (not shown). The gas-tight receiving means can also incorporate a means for conducting the released gas to an electrochemical power device.

In one embodiment, a power generating device, e.g., a fuel cell, can have a fracture-and-release mechanism incorporated into it and means for replaceably accepting the fuel cartridge with gas-tight seals so gas cannot escape into the environment. When the fuel cartridge tape is expired, it is removed and replaced with a fresh cartridge, in a manner similar to use of a primary battery.

FIG. 3 shows a feedback and control system (30) to supply gases at a controlled rate to an electrochemical power device (34) as required by load (36) by using a motor drive to advance an article of the invention. Electrochemical power device (34) produces a voltage and current in response to the electricity consuming load (36). Either the voltage or current (via sensing resistor (R35)), or some combination of the two such as their product (power), can be detected by the load sensing device (38) and compared to a reference signal (37) to determine if the load requires more or less gas. A microprocessor portion of load sensing device (38) can calculate the relevant amount of change in the rate of fuel supply required by load (36). Output of load sensing device (38) controls motor controller circuit (40) which regulates the power applied to drive motor (42) which moves the microbubble article (10, 10', 10") through the fracture/release mechanism (32) which can be a pair of crushing rollers. This supplies gas to the electrochemical power device (34) at the rate required by load (36). In another embodiment and in a similar fashion, the control signal generated by load sensing device (38) can be used to control power applied to acoustic, thermal or other fracture-release means (32) utilized. The power to operate drive motor (42), the electronics components of controller circuit (40) and load sensing device (38) and/or fracture release means (32) can be derived parasitically from electrochemical power device (34) and be represented as part of load (36). A small battery voltage divider circuit could supply the reference signal (37). A starting battery and circuit (44) can also supply current to initially start drive motor (42) and thereafter be removed electronically from the powering circuit by a signal from controller circuit (40) once electrochemical power device (34) begins delivering power to load (36). Alternatively, there can also be a recharging circuit as part of the load (36) to recharge the battery of circuit (44) that provides the initial starting energy.

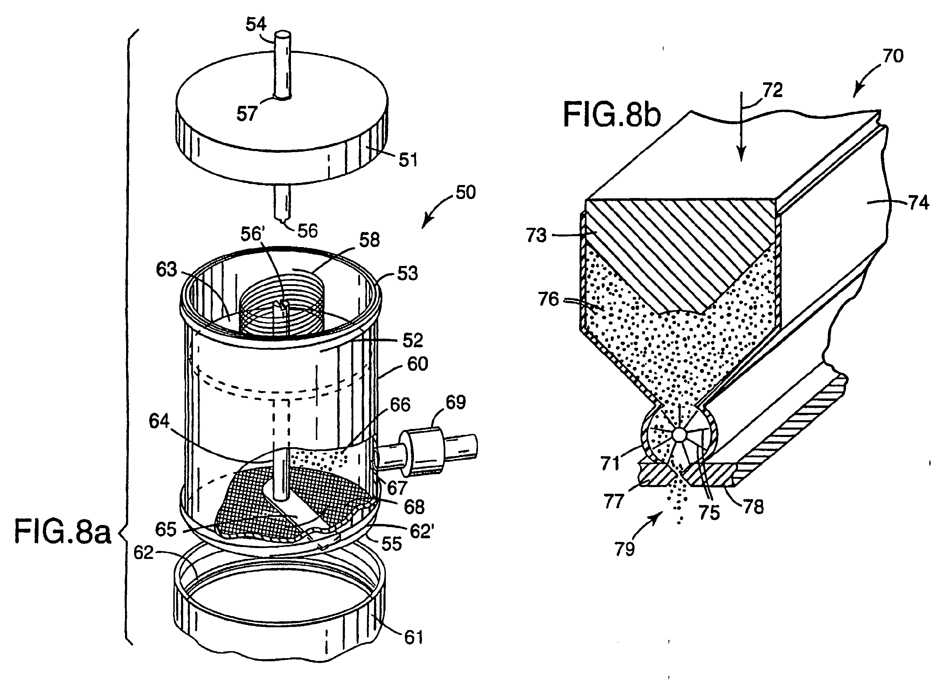

In addition to sheet-like articles, some embodiments of the present invention relate to microbubbles packaged in a free-flowing bulk form, as shown in FIGs. 8a and 8b.

FIG. 8a shows one embodiment of a package (50) of free-flowing microbubbles (66) in bulk useful in the present invention. Microbubbles (66) are housed in central housing portion (60) which comprises gas tight seals (53, 55) and threads (52, 62') on both of its ends, cover (51) with threads (not shown) and bottom portion (61) with threads (62). Removable cover (51) which comprises rotatable upper shaft (54) extending through hermetically sealed rotary motion feedthrough (57) can be coupled to lower shaft portion (64) by mating locking means (56, 56'), as shown, or any other suitable demountable connecting device for transmitting rotary motion. Cover (51), piston (63) and spring (58) can be removed to allow for recharging central housing portion (60) with microbubbles (66). Lower shaft (64) slides through pressure piston (63) and is secured to rotary blade (65). Downward pressure is exerted upon pressure piston (63) by spring (58) to continuously supply microbubbles (66) to rotating blade (65) to force microbubbles (66) through screen (68) which acts as a fracturing means. Screen (68) is provided with mesh size smaller than at least about 95 percent of the size of microbubbles (66). Blade (65) is canted with respect to screen (68) to entrap microbubbles (66) and force them against screen (68) to cause fracturing. Debris from microbubbles (66) falls into and is collected in removable bottom portion (61), the volume of which bottom portion (61) desirably is at least about 10 percent of the initial volume of microbubbles (66). Exit port (67) can be located anywhere in package (50) and is shown in Fig. 8a in central housing portion (60). The gas which is produced upon rupturing of microbubbles (66) exits through exit port (67) and is filtered through filter housing (69) which can contain any suitable removable or replaceable filter medium. More particularly, the filter medium (not shown) can comprise activated carbon for selective sorption of any or all non-desired gases, such as may result from microbubble-forming and -filling processes. For example, sulfur-containing blowing agents can be extracted from a gaseous mixture to leave the desired gas. The desired gas can then be delivered to an electrochemical power device.

FIG. 8b shows another embodiment of a package (70) of the invention. Microbubbles (76) are housed in trough-like housing (74) having pressure cover (73) upon which force (72) can be exerted to continuously supply microbubbles (76) to exit port (71) in which is located mechanically driven rotary means (75). Rotary means (75) delivers microbubbles (76) to fracturing means (77, 78) at a controlled rate. Fracturing means (77, 78) can be a mechanical, thermal, or acoustic device for fracturing microbubbles (76). Microbubble debris (79) can fall into a containment means (not shown). The released gas can be delivered through suitable filter means (not shown) to an electrochemical power device. It is understood that appropriate gas seals and motion coupling means are utilized, analogous to those described in FIG. 8a, in order to prevent the gas from escaping into the environment.

The article of the invention is useful as a fuel or oxidant storage and delivery system to supply electrochemical power devices, such as fuel cells and chemical batteries, particularly those used in portable power applications. Applications where the specific energy density, watt-hours/kg, need to be high and fuel source safety is critical are particularly relevant. Specific applications include, for example, use as a fuel source for a hydrogen/air fuel cell replacement of rechargeable batteries used in portable computers, camcorders and the like, or for powering remote sensing devices.

Objects and advantages of this invention are further illustrated by the following examples, but the particular materials and amounts thereof recited in these examples, as well as other conditions and details, should not be construed to unduly limit this invention.

### Hypothetical Model and Definition of Relevant Parameters

An example of a fuel source for a hydrogen/air fuel cell comprises a hydrogen filled microbubble loaded tape. We consider the case of a fuel cell operating with an average power of 10.2 watts, and requiring a 50 watt-hour fuel source capacity.

As the model fuel cell we consider a fuel cell stack consisting of 36 cells, with 14.5 cm² of electrochemical active area per cell, operating at 17.25 kPa (2.5 psig) of hydrogen (dead-ended, i.e., no flow), with an average output of 30.6 volts at 0.395 amps (12.1 watts). The rate of hydrogen use under these conditions is given by the total electrode area times the current density (36 x 0.395 amps) times (1/2F), where F is the Faraday, 96,484 coulombs/mole. The factor of 2 is necessary because 2 electrons are produced for each hydrogen molecule oxidized. The average hydrogen use rate is thus 7.36 x 10⁻⁵ moles of hydrogen per second.

As the model for the fuel source, the microbubble loaded tape as shown in FIG. 1, is rolled into a cylinder as shown in FIG. 2, 8 cm tall and 5.7 cm in diameter. Table I, below, summarizes the hydrogen delivery system characteristics for this model, assuming 100 percent breakage of the microbubbles. The amount of stored hydrogen (41,400 kPa in microbubbles at 23°C) is 1.25 moles. Service time at a use rate of 7.36 x 10⁻⁵ moles/sec is 4.8 hours. As indicated, each 23 meter long roll of H₂/microbubble (41.4 MPa) loaded tape with the model assumptions here weighs 64.3 g and has the capacity to deliver hydrogen at the required use rate of the fuel cell to provide 10.2 watts for 4.8 hours, for an energy density of 733 Whr/kg and 240 Whr/L. Because energy density is dependent on the efficiency of the device using the hydrogen, specifying the H₂ molar density of the tape roll is more specific, and for this model is 19.4 moles/kg, or 3.9 percent by weight hydrogen to total carrier weight.

**Table I. Summary of the tape delivery characteristics for the hypothetical model**

| |
|---|
| Moles of hydrogen per 43.6 µm diameter microbubble at 41.4 MPa = 6.89 x 10⁻¹⁰ moles. |
| Microbubble density (cubic packing density, both sides of tape) = 9.85 x 10⁴/cm² |
| Tape width = 8 cm (70 percent of 4.5" canister height) |
| H₂ released per cm of tape advance, for 8 cm width = 5.45 x 10⁻⁴ moles/cm |
| Tape speed for average generation rate of 7.36 x 10⁻⁵ moles/sec = 0.135 cm/sec. |
| Length of tape required to generate 10.2 W for 4.8 hours = 23.0 meters |
| Number of tape windings around 1 cm core for 23 m length = 225 |
| Diameter of tape roll for 225 windings of 105 µm thick tape = 5.7 cm (2.24 in.) |
| Weight: 0.0125 mm PET, 6 µm adhesive, microbubbles and H₂ = 31.2 g + 3.68 g + 27.8 g + 2.5 g = 64.3 g |
| Densities: Energy - 733 Whr/kg, 240 Whr/L Hydrogen - 19.4 moles/kg |

### Example 1. Filling glass microbubbles with hydrogen

All the examples below use Scotchlite™ glass microbubbles, product type D32/4500 (commercially available from 3M, St. Paul, MN). The average microbubble density was 0.32 ± 0.02 g/cc, the mean microbubble diameter was 43.6 micrometers with 95 percent confidence limits of 16.1 to 71.1 micrometers. Bulk density was measured to be 0.20 g/cc for the lot of as-received microbubbles tested. Scanning electron micrographs of fractured microbubbles show wall thicknesses of approximately one micrometer. The microbubbles were used without any pretreatment.

Two batches of microbubbles were filled with hydrogen in an autoclave to, respectively, 27.6 MPa (4000 psig) and 39.5 MPa (5720 psig) at 425°C. The microbubble batches were exposed to these pressures and temperatures for eight hours after ramping the pressure in approximately 13.8 MPa (2000 psig) increments and holding the temperature at 425°C for three hours between increments. The diffusivity of hydrogen through the silica walls of the microbubbles increased as a strong function of temperature, so the glass effectively switched from impermeable at ambient temperatures (approximately 25°C) to highly permeable at high temperatures as disclosed in P.C. Souers, R.T. Tsugawa and R.R. Stone, "Fabrication of the Glass Microballoon Laser Target," Report Number UCRL-51609, Lawrence Livermore Laboratory, July 12, 1974; and Michael Monsler and Charles Hendricks, "Glass Microshell Parameters for Safe Economical Storage and Transport of Gaseous Hydrogen," presented April 1, 1996, at the *Fuel Cells for Transportation TOPTEC* meeting, Alexandria, VA. Cooling the microbubbles in the high pressure hydrogen effectively trapped the latter at the pressure of the cooled gas, as given by the ideal gas law, e.g., the 27.6 MPa (4000 psig) (425°C) treated microbubbles were filled to (27.6 MPa)x(300K)/[(273K + 425C] = 11.9 MPa at 27°C. Similarly, the 39.5 MPa (425°C) treated microbubbles contained 17.0 MPa at 27°C.

A lower limit to the amount of hydrogen contained in the microbubbles was measured by placing a known mass of microbubbles inside a common balloon with a ball bearing (for weight) and 3.5 grams of glycerol (for pressure uniformity), and tying off the balloon. The volume was measured (by displacement of an oil column in a graduated cylinder), then the balloon and contents were pressurized to 138.0 MPa, to burst most of the microbubbles. The released hydrogen increased the balloon volume at atmospheric pressure, which was remeasured by displacement of the oil column. The microbubbles pressurized to 27.6 MPa (425°C) produced 11.5 cc of hydrogen from 0.060 g of filled microbubbles, and the microbubbles filled at 39.5 MPa (425°C) produced 10.0 cc from 0.040 g. These amounts of gases were lower limits because not all the microbubbles were broken, especially the strong, small diameter, high aspect ratio (wall thickness/diameter) microbubbles, and some of the hydrogen was dissolved in the glycerol. These values imply, respectively, 7.78 millimoles H₂/g (1.56 millimoles/cc) of microbubbles and 10.1 millimoles H₂/g (2.02 millimoles/cc) of microbubbles. The absolute expected concentrations, assuming the microbubbles filled and broke completely, would be, respectively, 2.61 millimoles/cc and 3.74 millimoles/cc. The measured values by the pressurized breakage method were 40 percent and 46 percent smaller, respectively, than these expected values, which suggested that many of the microbubbles can withstand hydraulically applied over-pressures of 110 MPa without breaking.

### Estimation of Extent of Breakage During Filling

FIG. 5 shows a scanning electron micrograph of a representative sample of microbubbles (46) filled at 41.4 MPa pressure. Similar SEMs from microbubbles pressurized at 27.6 MPa showed minimal evidence of breakage, but clear evidence of debris (48) from fractured microbubbles can be seen in those pressurized at 41.4 MPa in FIG. 5. The extent of breakage was estimated as described below.

The change in bulk density of the filled microbubbles was measured gravimetrically. Samples of the microbubbles from each batch were packed into glass vials with calibrated volumes, tapped repeatedly until no further change in volume was observed, then massed to the nearest tenth of a milligram.

Volumes of 5 mL and 1 mL were so massed four times each and compared to the clean, dry unfilled vials. The average bulk density of the hydrogen filled and empty microbubbles and the differential densities are summarized in Table II, below, for the first batch (11.8 g) of microbubbles filled to 27.6 MPa at 425°C.

**Table II.**

| | |
|---|---|
| Density of hydrogen filled microbubbles (1 ml volume) | = 0.2111 ± 0.0009 g/cm³ |
| Density of as-received D32/4500 microbubbles (1 ml vol.) | = 0.2017 ± 0.0020 g/cm³ |
| Differential density (1 ml vol.) | = 0.0096 ± 0.0029 g/cm³ |
| Density of hydrogen filled microbubbles (5 ml volume) | = 0.2064 ± 0.0002 g/cm³ |
| Density of as-received D32/4500 microbubbles (5 ml vol.) | = 0.1982 ± 0.0002 g/cm³ |
| Differential density (5 ml vol.) | = 0.0082 ± 0.0004 g/cm³ |
| Average differential density | = 0.0089 ± 0.0033 g/cm³ |

A quantitative estimate of the extent of breakage was obtained by comparing the average differential density above with the expected density calculated from the known fill pressure and average internal volume of the microbubbles, as follows:

The internal volume of the microbubbles per cubic centimeter was estimated from the average true D32/4500 microbubbles density (from ASTM D2840-84) of ρₜ = 0.32 ± 0.02 g/cc, the density of soda-lime borosilicate glass, ρ_{g} = 2.5 g/cc, and the microbubble packing fraction. The internal volume was 87.2 percent of the average microbubbles' external volume (ρ₈ - ρₜ/(ρ₈ - ρₐᵢᵣ). The microbubble packing fraction, 62.5 percent, was the ratio of the bulk density (0.202 g/cc) and the true density (0.32 g/cc). The packing fraction times the average microbubble's internal volume fraction then gave the relative internal volume fraction, or 55 percent.

At 300°K and a pressure of 11.9 MPa (117 atmospheres) contained within the 55 percent volume fraction of the microbubbles' interiors, the calculated number of moles of hydrogen per cubic centimeter of microbubbles was (117)(0.55)/24,617 = 0.00261 moles/cc, implying a hydrogen mass of 5.23 mg/cc. The observed differential mass (above) of 8.9 mg/cc was significantly larger. This was likely due to a small fraction of broken microbubbles, the fragments of which were lodged in the interstices of the whole microbubbles, which added mass but not volume. If a fraction, f, of the microbubbles were broken per unit volume, the apparent bulk density would be increased by this fraction, assuming the pieces added no volume. Thus, 0.32 f g/cc = (8.9 mg/cc - 5.74 mg/cc) gave f = 0.009 or 1.0 percent of the microbubbles were broken at this fill pressure.

The corresponding values for the 30 g batch of D32/4500 microbubbles filled at 39.4 MPa (425°C) are given in Table III, below.

**Table III.**

| | |
|---|---|
| Gravimetric differential density of filled microbubbles | = 0.0281 ± 0.0002 g/cm³ |
| Calculated differential density for 17.0 MPa (300K) | = 0.00747 |
| Fraction f of broken microbubbles represented by increased apparent density | = 0.064 or 6.4%. |

### Example 2. Coating hydrogen-filled microbubbles on tape using a spray applied binder

Glass microbubbles similar to those in Example 1 were filled with hydrogen using a procedure similar to that in Example 1 to a pressure of 44.7 MPa at 425°C. This nominally loads the microbubbles with 21.0 MPa at 27°C. Multilayers of filled microbubbles were coated onto both sides of a 12.5 micrometer thick by 7 cm wide web of PET using a clear acrylic paint spray (No. 02000 Sprayon™ from Sherwin Williams, Inc.) as follows: The spray can was held above the web a distance of 25-30 cm and moved parallel to its length at a speed of approximately 10 cm/sec for a distance of about 30 cm. Immediately after spraying, the hydrogen filled microbubbles were liberally sprinkled onto the sprayed web so as to completely cover that web surface, while vibrating the web from beneath so as to cause the microbubbles to rapidly bounce around and form a complete layer. After another period of about 30 seconds to allow the acrylic coating to dry, the procedure was repeated to deposit a second layer of microbubbles onto the first layer of microbubbles. Finally, a third coating of acrylic spray was added over the top of the second layer of microbubbles to act as an overall binder. This process was then repeated on four more 30 cm sections of web.

FIG. 7 shows a typical scanning electron micrograph of the cut edge of a doubly coated PET web of this example.

The average mass per unit area of the coated microbubbles was determined by comparing the measured areal densities of the so coated web sections to control sections which had the same amount of acrylic spray binder applied but no glass microbubbles. The result was 1.23 mg/cm². Data in Table IV summarizes all the characteristics of the coated tape samples of this example, and assumes for energy density purposes, the same fuel cell performance factors as used in Table I. The nominal amount of hydrogen contained per unit area of the microbubble coated web was 2.52 x 10⁻⁵ moles/cm².

The energy density of the microbubble loaded tape of this example can be increased to match that of the hypothetical example in Table I by both increasing the microbubble fill pressure to 41.4 MPa and reducing the weight of the carrier support and binder. The requisite changes in the tape characteristics are shown in "Improved Example 2" data of Table IV, below.

| **Table IV. Comparison of measured microbubble loaded tape characteristics for Example 2 and Improved Example where the filling pressure was higher and carrier weight lowered.** | | |
|---|---|---|
| **Measured Tape Characteristic** | **Example 2 (21.0 MPa)** | **Improved Example 2 (41.4 MPa)** |
| Bulk density of filled microbubbles | 0.2262 g/cm³ | 0.2262 g/cm³ |
| Moles of H₂ per cm³ of filled microbubbles at 21.0 MPa or 41.4 MPa | 4.64 x 10⁻³ mol/cm³ | 9.13 x 10⁻³ mol/cm³ |
| Moles of H₂ per gram of microbubbles at 21.0 MPa or 41.4 MPa | 2.05 x 10⁻³ mol/g | 4.03 x 10⁻³ mol/g |
| Microbubble loading density per cm² of carrier, both sides coated | 1.23 mg/cm² | 1.23 mg/cm² |
| Moles of H₂ per cm² of carrier | 2.52 x 10⁻⁵ mol/cm² | 4.96 x 10⁻⁵ mol/cm² |
| H₂ released per cm advance of 8 cm wide tape for 95% breakage | 1.92 x 10⁻⁴ mol/cm | 3.78 x 10⁻⁴ mol/cm |
| Tape speed for average generation rate of 7.36 x 10⁻⁵ mol/sec | 0.383 cm/sec | 0.195 cm/sec |
| Tape length to generate 10.2 watts for 4.8 hours | 66.2 meters | 33.7 meters |
| Component weight fractions for total tape length | | |
| • Carrier substrate | 90.1 g (0.0125 mm | 22.5 g (0.0061 mm) |
| • Binder | 33.9 g | 12.5 g (75% less/area) |
| • Glass microbubbles | 62.5 g | 31.25 g |
| • Hydrogen | 2.67 g (1.4% by wt) | 2.67 g (3.9% by wt) |
| Tape thickness | 0.015 cm | 0.014 cm |
| Molar density of hydrogen | 7.06 mol/kg | 19.06 mol/kg |
| Specific Energy Density (for fuel cell example) | 259 Whr/kg | 710 Whr/kg |
| Volumetric Energy Density (for fuel cell example | 62 Whr/liter | 121 Whr/liter |

### Example 3. Coating glass microbubbles on tape substrate using a tackifiable layer

Three types of water-based emulsion coatings were used to evaluate ways to bind a single layer of the glass microbubbles to a PET substrate. Coating A was Rhoplex™ HA-8, a self-crosslinking acrylic emulsion made by Rohm and Haas Co., Philadelphia, PA. Coating B was Airflex™ 426, a vinyl acetate-ethylene emulsion from Air Products and Chemicals, Inc., Allentown, PA. Coating C was Airflex™ 460, a related material. Handspreads on 0.025 mm thick PET with multiple sizes of Meyer bars and various concentrations of the three emulsions were made and allowed to air dry. Coating weights were measured and selected samples characterized with scanning electron microscopy to determine the film thickness for a given set of coating conditions (Meyer bar and percent emulsion concentration in water). Two methods were used to evaluate attachment of monolayers of microbubbles to coated PET substrates: a heat-bonded method, and a wet-bonded method.

### Heat-bonded microbubbles method

In the first method, pieces of the handspreads were heated in a glass dish on a hot plate, emulsion side up, until the emulsion became tacky (approximately 60 - 90°C), at which time glass microbubbles were poured over the emulsion and the dish was gently hand-shaken to fully cover the emulsion surface. The dish was removed from the heat and, after cooling, excess microbubbles were removed from the PET by shaking or by snapping the PET sheet with a finger. The microbubbles remaining on the emulsion-coated PET were firmly attached in that the surface could be brushed with fingers and microbubbles were not removed. Table V, below, summarizes the mass loadings of the microbubbles applied with this first method, for six coatings.

| Table V. Heat Binding Approach to Attach Monolayer of Microbubbles to PET | | | | | | | |
|---|---|---|---|---|---|---|---|
| Sample #, Coating type & Meyer bar | % Emulsion in water | Coating weight mg/cm² | Coating thickness microns | Contact Temp. °C | Microbubble loading mg/cm² | Microbubble layer | |
| | | | | | | Effective thickness microns | Microbubble monolayer fraction* |
| 3-1 A 7S | 100 | 0.71 | 20 | 99 | 0.51 | 25.4 | 0.58 |
| 3-2 B 12 | 25 | 0.26 | 8.5 | 92 | 0.71 | 35.5 | 0.81 |
| 3-3 B 7B | 100 | 0.90 | 25 | 99 | 0.71 | 35.5 | 0.81 |
| 3-4 B 3S | 25 | 0.22 | 7.3 | 80 | 0.65 | 32.5 | 0.75 |
| 3-5 C 3B | 25 | 0.09 | 1.6 | 80 | 0.69 | 34.5 | 0.79 |
| 3-6 C 7B | 100 | 1.06 | 17.5 | 99 | 0.58 | 29.0 | 0.67 |

| | | | | | | | |
|---|---|---|---|---|---|---|---|
| * This is the effective layer thickness divided by a mean sphere diameter of 43.6 µm. | | | | | | | |

From the known bulk density of the microbubbles and the mass loadings data in Table V, the calculated effective layer thickness was determined (Table V) and, from that, the monolayer packing fraction. FIGS. 4a and 4b show representative SEM micrographs of the microbubble-coated PET from sample 3-3 in Table V at two viewing angles and magnifications, illustrating a monolayer packing visually consistent with the calculated values in Table V. Micrographs from the five other samples were similar. The portion of sample 3-3 shown in FIG. 4b had approximately 1.2 x 10⁵ microbubbles/cm², counting all sizes of microbubbles. This was slightly larger than 9.9 x 10⁴/cm² calculated for a monolayer of identically sized, cubic packed spheres.

The data of Table V and FIGS. 4a and 4b show that the microbubbles were adequately attached at sufficiently high monolayer packing densities by simply contacting them with heat tackified emulsion layers of thickness in the range of approximately 2 micrometers to 25 micrometers. Unexpectedly, the microbubbles' low mass yielded adequate adhesion with only their bottom point in contact with the adhesive layer. It was desirable to use as little adhesive as possible to attach the glass microbubbles to the substrate, so that the emulsion layer contributed as little as possible to the mass loading. It was also the preferred thickness from the standpoint of ease in crushing the maximum number of microbubbles during the release step. A bond layer that is too thick or soft can conceivably cushion the microbubbles and prevent their complete breakage. Attaching microbubbles to both sides of a web coated with emulsion on both sides was a preferred construction because it further optimized the hydrogen density.

As shown in FIG. 6, gas filled microbubbles (45), heat-bonded to support (47), were overcoated with thin adherent conformal layer (49) of acrylic spray.

### Wet-bonded microbubbles method

Microbubbles were applied to coated emulsions immediately after coating with the Meyer bar and before the coating was dry. After drying and shaking the substrates to remove excess microbubbles, mass loadings of the microbubbles were determined for the samples shown in Table VI, below. It was found necessary to dilute the as-received emulsions to slow drying sufficiently to obtain adhesion. In general, it was observed that distribution uniformity and adhesion of the microbubbles on coated PET substrates were inferior to the heat-bonded approach. As indicated by the microbubble layer packing fraction, sample types 3-7 and 3-8 had effectively more than a monolayer of microbubbles, due to uneven coverage and piling up of microbubbles as the cast layer dried. These excess microbubbles were not as firmly held.

| **Table VI. Wet-Bonding Microbubble Attachment Approach** | | | | | |
|---|---|---|---|---|---|
| Sample #, Coating type and Mayer bar | % Emulsion in water | Coating weight mg/cm² | Microbubble loading mg/cm² | Microbubble layer effective thickness microns | Microbubble monolayer fraction |
| 3-7 C 7B | 50 | 1.06 | 1.23 | 61.5 | 1.4 |
| 3-8 B 7B | 50 | 0.45 | 1.06 | 53 | 1.2 |
| 3-9 A 7B | 50 | 0.36 | 0.69 | 34.5 | 0.79 |

### Example 4. Double Layer of Hydrogen Filled Microbubbles on a Low Weight Substrate

Approximately 39.7 m of a 15.2 cm wide roll of 0.0125 mm thick PET was gravure coated on both sides with a 50 weight percent solution of the Rhoplex™ HA-8 emulsion at 6.1 m per minute. The measured dried emulsion coating weights for the two sequential coatings were 0.17 mg/cm² and 0.13 mg/cm². These corresponded to adhesion layer thicknesses of 3.5 to 4.5 micrometers. A polyethylene liner was used as a release layer and co-wound with the PET.

A 7.6 cm x 30.5 cm strip of the double-coated PET was placed in a Teflon™ coated Al pan heated to approximately 80°C. Hydrogen filled microbubbles to 17.0 MPa (300°K) were poured over the top surface of the heated sample and gently brushed around to cover the entire surface. The sample was turned over, microbubbles were added to the other side, and then it was allowed to cool. Excess microbubbles were removed by shaking and by snapping the sheet with a finger.

The measured mass loading of the microbubbles and emulsion coated PET base was 3.19 mg/cm², and the microbubbles alone was 0.934 mg/cm². The calculated hydrogen concentration in the 17.0 MPa (at 300°K) microbubbles of 18.7 millimoles/g of microbubbles (or 3.74 millimoles/cm³) implied a hydrogen loading on the tape of 1.75 x 10⁻⁵ moles/cm², or 5.48 moles/kg of tape. For the example fuel cell model in Example 1, giving 39.1 Whr/mole of H₂ consumed, this loading implied a potential gravimetric density of 209 Whr/kg. The easiest way to increase this density towards that suggested in Table I, is to fill the microbubbles to higher pressure. At 41.4 MPa at 300°K, the energy density would be 510 Whr/kg. Such pressures can be obtained using a multi-step filling process and lower filling temperature. Using a lower density support (PET and adhesive layer) would also help to increase the specific energy density.

### Example 5. Filling microbubbles at 250°C

Twenty grams of the same type of glass microbubbles as used in the previous examples were filled with hydrogen by heating in an autoclave at 254°C and 27.7 MPa for 8 hours. The hydrogen released upon breaking the microbubbles was measured to be 237 scc/g of microbubbles, in excellent agreement with the expected amount. This shows that 250°C was an adequate temperature to fill the glass microbubbles with hydrogen.

### Example 6. Fracturing microbubbles on tape

A pair of solid aluminum cylinders, 2.54 cm in diameter and 8 cm long, were mounted parallel to one another between metal end plates. The cylinders were covered with 500 grade, type 411Q wet or dry TRI-M-ITE sand paper (3M Co.). Two small springs attached between the ends of the cylinders pulled the latter towards one another so that the sand paper at the contact line between the cylinders was under compression. The force provided by the two springs was estimated to be equal to the weight of a few hundred grams. A 7 cm wide strip of the coated web made in Example 2 was pulled by hand between cylinders, fracturing the glass microbubbles by a combination of mechanical shear and compression forces. An SEM examination of the tape area that was passed through the cylinders showed about 90 percent breakage.

Hydrogen thus released can be directed to the anode of a fuel cell for production of electrical energy. In applications where the gas is an oxidant, it is directed to the cathode of a fuel cell.

## Claims

1. An article comprising at least one containment means comprising pressurized gas-filled microbubbles, said gas being controllably releasable on demand by fracturing said microbubbles, wherein said containment means comprises an adherent layer on a support, and wherein the gas-filled microbubbles are bonded to said adherent layer.

2. The article according to claim 1 wherein said gas is a reductant gas or an oxidant gas.

3. The article according to claim 1 or 2 wherein said microbubbles have shells made ofa material selected from the group consisting of glasses, ceramics, and metals.

4. The article according to any one of claims 1 to 3 wherein said microbubbles comprise at least one of a gas at a pressure in the range of 0.69 to 138 MPa, shells having average thicknesses in the range of 0.01 µm to 2.0 µm, and average sizes in the range of 1 to 1000 µm.

5. The article according to any one of claims 1 to 4 wherein said gas is released by fracturing means selected from the group consisting of mechanical, thermal, and acoustic means.

6. The article according to any one of claims 1 to 5 which is in the form of a roll of tape.

7. The article according to any one of claims 1 to 6 for supplying hydrogen or oxygen to an electrochemical power device.

8. A method of delivering a gas at a controlled rate comprising the steps of:
a) providing an article according to any one of claims 1 to 7, and
b) subjecting said pressurized gas-filled microbubbles to a means for controllably releasing said gas from said microbubbles at a controlled rate by fracturing.

9. The method according to claim 8 wherein said article comprises at least one of a holder, envelope, bag adherent layer on a support, and network of fibers, as containment means for said gas-filled microbubbles.

10. The method according to claim 8 or claim 9 wherein said article comprises a bondable material for adhering said microbubbles to said containment means.

11. An apparatus for delivering gas at a controlled rate comprising
a) an article according to any one of claims 1 to 7,
b) a means for causing release of said gas from said microbubbles by fracturing, and
c) a feedback and control means for releasing gas to an electrochemical power device at a controlled rate determined by a load.

## Patentansprüche

1. Gegenstand, der mindestens ein Aufnahmemittel aufweist, das mit Druckgas gefüllte Mikroblasen aufweist, wobei das Gas bei Bedarf durch Zerbrechen der Mikroblasen gesteuert freisetzbar ist, wobei das Aufnahmemittel eine Haftschicht auf einem Träger aufweist und wobei die gasgefüllten Mikroblasen an die Haftschicht gebunden sind.

2. Gegenstand nach Anspruch 1, wobei das Gas ein reduzierendes Gas oder ein oxidierendes Gas ist.

3. Gegenstand nach Anspruch 1 oder 2, wobei die Mikroblasen eine Hülle aus einem Material ausgewählt aus der Gruppe, bestehend aus Glasen, Keramiken und Metallen, aufweisen.

4. Gegenstand nach einem der Ansprüche 1 bis 3, wobei die Mikroblasen mindestens ein Gas mit einem Druck im Bereich von 0,69 bis 138 MPa, Hüllen mit durchschnittlichen Dicken im Bereich von 0,01 µm bis 2,0 µm und durchschnittlichen Größen im Bereich von 1 bis 1000 µm aufweisen.

5. Gegenstand nach einem der Ansprüche 1 bis 4, wobei das Gas durch Zerbrechmittel, ausgewählt aus der Gruppe, bestehend aus mechanischen, thermischen und akustischen Mitteln, freigesetzt wird.

6. Gegenstand nach einem der Ansprüche 1 bis 5, der in Form einer Bandrolle vorliegt.

7. Gegenstand nach einem der Ansprüche 1 bis 6 zur Versorgung einer elektrochemischen Leistungsvorrichtung mit Wasserstoff oder Sauerstoff.

8. Verfahren zur Abgabe eines Gases mit einer gesteuerten Geschwindigkeit, aufweisend die Schritte:
a) Bereitstellen eines Gegenstands nach einem der Ansprüche 1 bis 7 und
b) Aussetzen der mit Druckgas gefüllten Mikroblasen an Mittel zur steuerbaren Freisetzung des Gases aus den Mikroblasen mit einer gesteuerten Geschwindigkeit durch Zerbrechen.

9. Verfahren nach Anspruch 8, wobei der Gegenstand mindestens einen Halter, einen Umschlag, eine Tasche, eine Haftschicht auf einem Träger oder ein Netz aus Fasern als Aufnahmemittel für die gasgefüllten Mikroblasen aufweist.

10. Verfahren nach Anspruch 8 oder Anspruch 9, wobei der Gegenstand ein bindefähiges Material zum Anhaften der Mikroblasen an dem Aufnahmemittel aufweist.

11. Vorrichtung zur Abgabe von Gas mit einer gesteuerten Geschwindigkeit, aufweisend
a) einen Gegenstand nach einem der Ansprüche 1 bis 7,
b) ein Mittel zum Verursachen der Freisetzung des Gases aus den Mikroblasen durch Zerbrechen und
c) ein Rückmeldungs- und Steuermittel zum Freisetzen von Gas an eine elektrochemische Leistungsvorrichtung mit einer gesteuerten Geschwindigkeit, die von der Last bestimmt wird.

## Revendications

1. Objet qui présente au moins un moyen de confinement qui comprend des microbulles remplies de gaz sous pression, ledit gaz pouvant être libéré de manière contrôlée à la demande en rompant lesdites microbulles, ledit moyen de confinement comprenant une couche adhésive située sur un support et les microbulles remplies de gaz étant reliées à ladite couche adhésive.

2. Objet selon la revendication 1, dans lequel ledit gaz est un gaz réducteur ou un gaz oxydant.

3. Objet selon les revendications 1 ou 2, dans lequel lesdites microbulles présentent des coquilles formées d'un matériau sélectionné dans l'ensemble constitué des verres, des céramiques et des métaux.

4. Objet selon l'une quelconque des revendications 1 à 3, dans lequel lesdites microbulles comprennent au moins un gaz sous une pression comprise dans la plage de 0,69 à 138 MPa, l'épaisseur moyenne des coquilles étant comprise dans la plage de 0,01 µm à 2,0 µm et leur taille moyenne étant comprise dans la plage de 1 à 1 000 µm.

5. Objet selon l'une quelconque des revendications 1 à 4, dans lequel ledit gaz est libéré à l'aide d'un moyen de rupture sélectionné dans l'ensemble des moyens mécaniques, thermiques et acoustiques.

6. Objet selon l'une quelconque des revendications 1 à 5, qui présente la forme d'un rouleau de ruban.

7. Objet selon l'une quelconque des revendications 1 à 6, qui est destiné à délivrer de l'hydrogène ou de l'oxygène à un dispositif d'alimentation en énergie électrochimique.

8. Procédé pour délivrer un gaz à un débit contrôlé, le procédé comprenant les étapes qui consistent à:
a) prévoir un objet selon l'une quelconque des revendications 1 à 7 et
b) soumettre lesdites microbulles remplies de gaz sous pression à un moyen qui libère de manière contrôlée et à un débit contrôlé ledit gaz desdites microbulles en rompant ces dernières.

9. Procédé selon la revendication 8, dans lequel ledit objet comprend au moins un support, une enveloppe, un sac, une couche adhésive située sur un support ou un réseau de fibres comme moyen de confinement desdites microbulles remplies de gaz.

10. Procédé selon les revendications 8 ou 9, dans lequel ledit objet comprend un matériau de liaison qui fait adhérer lesdites microbulles audit moyen de confinement.

11. Appareil pour délivrer un gaz à un débit contrôlé, l'appareil comprenant:
a) un objet selon l'une quelconque des revendications 1 à 7,
b) un moyen qui entraîne la libération dudit gaz desdites microbulles en les rompant et
c) un moyen de rétroaction et de commande qui délivre le gaz à un dispositif d'alimentation en énergie électrochimique à un débit contrôlé déterminé par une charge.
